# EUROPEAN PATENT APPLICATION

(11) **EP 2 244 170 A1**
(43) Date of publication of application: **27.10.2010**
(21) Application number: 09166334.4
(22) Date of filing: 24.07.2009
(51) Int. Cl.: G06F 3/03

(54) **Stereo imaging touch device**

(30) Priority: 22.04.2009 CN 200910133997
(71) Applicant: J Touch Corporation, Zhong Li Industrial Park Taoyuan Hsien 320 (TW)
(72) Inventor: Yeh, Yu-Chou, Cambridge, Cambridgeshire CB11AH (GB)
(74) Representative: Horak, Michael

(57) **Abstract**

A stereo imaging touch device includes an image capturing unit, a CPU, and a touch display unit electrically connected in sequence. The touch display unit has a touch unit capable of being touched by a touch body and computing a motion track of the touch body, and a stereo imaging unit capable of converting a stereo image into multiple images. When the touch display unit is disposed on a display unit, the stereo image displayed by the display unit can change in real time along with the motion track, so as to achieve an interactive effect of a virtual stereo image during the touch operation

## Description

### BACKGROUND OF THE INVENTION

### Field of Invention

The present invention relates to a touch device, and more particularly to a stereo imaging touch device, which is capable of displaying a stereo image and enabling the stereo image to change accordingly upon being touched.

### Related Art

With the rapid progress of the display technology, the flat-panel display has already achieved the high-resolution and full-color display effects, which, however, still cannot satisfy people's demand on the visual perception. The reasons are that, it is hard to sense the visual effects of deep/shallow and far/near in terms of the flat-panel display, and meanwhile, other parts of a displayed object can only be viewed after the image is converted into an image for showing the object in a different viewing angle.

Therefore, many persons in the art start researches on a display capable of displaying a stereo image. Mainly, after an object is irradiated by light rays, the reflected light rays are received by the human eyes, then transmitted to the brain through the optic nerves, and further synthesized into a stereo image. Here, the object is a real stereo object. However, such a stereo object cannot be actually produced on the display. Thus, the image produced on the display is at least divided into two parts by using the technologies like grating, in which one part is specifically received by the left eye and the other part by the right eye, so as to be combined into a stereo image in the brain.

Currently, well-known technologies such as polarization division, time division, wavelength division, and spatial division are available.

In the polarization division, before an image is input on a screen, polarizers having different polarization directions on the left and right sides are employed to make the generated image have two frames in different polarization directions, i.e., to make the images respectively viewed by the left eye and the right eye have different polarization directions, in which one polarization direction is horizontal, and the other is vertical. The polarized glasses worn by a user have lenses with left and right polarization directions being perpendicular to each other. Specifically, the left-eye lens of the polarized glasses is a horizontally polarized lens, which merely allows horizontally polarized images to pass through and blocks vertically polarized images. The right-eye lens of the polarized glasses is a vertically polarized lens, which merely allows vertically polarized images to pass through and blocks horizontally polarized images.

In the time division, images for the left eye and the right eye are presented at different time points. It is assumed that when a frame in the visual field of the left eye is to be presented, a left eye window of the 3-dimensional (3D) glasses is open, and a right eye window is closed. Next, when a frame in the visual field of the right eye is to be presented at the next time point, the right eye window of the 3D glasses is open, and the left eye window is closed. Therefore, the left eye only views images in the viewing angle of the left eye, and the right eye only views images in the viewing angle of the right eye. If the emitter cooperates well with the 3D glasses, the two lenses of the 3D glasses can individually block 60 times per second. Moreover, due to the visual staying phenomenon, the brain synthesizes the images received by the left and right eyes into one stereo image.

In the wavelength division, a red-shift frame processing and a green-shift frame processing are first performed on the images perceived by the left and right eyes. When the viewer wears colored spectacles with a red left-eye lens and a green right-eye lens, his/her left eye only views red images in the viewing angle of the left eye, and the right eye only views green images in the viewing angle of the right eye, so as to form a stereo image with left and right frames in different colors respectively.

In the spatial division, the images perceived by the left and right eyes are respectively shown on individually independent displays, in which a left-eye display shows frames in the viewing angle of the left eye, and a right-eye display shows frames in the viewing angle of the right eye. Alternatively, a technology of interlacing and synthesizing left and right images is used together with a lenticular sheet or parallax barrier in terms of synthesizing images, so as to restrict the left and right images to enter the left and right eyes respectively, such that the two images are automatically integrated in the brain to produce an image effect with a stereo depth.

The images produced by the above four methods achieve stereo effects in different degrees. Nowadays, most of the stereo images displayed on an ordinary flat screen need to be viewed while wearing corresponding 3D glasses, so that such stereo display system is also called Eyeglass-type 3D system.

Though the images displayed by the Eyeglass-type 3D system have nice stereo effects, the viewers have to wear special glasses, which is difficult to get popular among ordinary people. In addition to a peculiar appearance of the 3D glasses, the main reason lies in some potential human factor problems that generally occur when the viewer faces an unfamiliar visual interface. Taking a head-mounted display (HMD) for example, more and more researches pointed out that, the viewer may feel dizzy or sick after wearing the HMD for a long time. Therefore, the current stereo image display should develop towards a trend of achieving a free viewing space without wearing glasses.

Recently, the naked-eye viewable 3D stereo image display method is realized through a lenticular sheet, a parallax barrier, a binocular parallax, or a light source slit method.

In the parallax barrier method, the stereo sense is mainly generated by using binocular parallax. Two images obtained at different angles are respectively segmented into vertical stripes spaced apart by an equal distance, and then the left and right images are alternated and synthesized together in an interlacing manner. The even-number part of the synthesized image is the right image, and the odd-number part is the left image. However, in order to achieve the stereo effect, the grating stripes with light-transmissive slits and opaque barriers perpendicularly spaced from each other are disposed on the synthesized frame, and the width of the slits and barriers is consistent with the width for segmenting the left and right images. Meanwhile, the shielding effect of the barriers is utilized to restrict the left and right eyes to respectively view the left and right images, so that the images perceived by the two eyes are different from each other, so as to produce a stereo sense. It should be noted that, the barrier stripes should be spaced apart from the synthesized frame by a distance, so as to enable the left and right eyes to respectively view the interlaced images, thereby producing a desired stereo sense.

After the stereo imaging technology has been proposed, the subsequent challenge is to apply such technology in touch panels. With the development of the technologies, the touch technology has been completely integrated with physical products, for example, cathode ray tube display (CRT) or liquid crystal displays (LCDs). Thus, when the display shows a stereo image, the stereo image should produce motions along with the touch of the user. Therefore, how to enable a stereo image to change correspondingly according to the touch operation is a problem to be solved by the present invention.

In addition, as for the current real-time stereo image displaying method, for example, a method for generating continuous stereo images has been disclosed in US Patent No. 6404913, entitled "Image Synthesizing Apparatus and Method, Position Detecting Apparatus and Method, and Supply Medium", in which several image pick-up devices are employed to capture a surface of an object. Then, the captured images are displayed in real time on a display such as a liquid crystal panel, and the displayed stereo images are made more vivid through coordinate prediction and coordinate computation. However, in this patent, though the stereo image is displayed, the image cannot interact with the user, i.e., when viewing the stereo image, the user must modify the appearance of the image or convert the angle of the image by using external input devices such as a keyboard and a mouse, thereby failing to display the stereo image in real time.

### SUMMARY OF THE INVENTION

In order to solve the above problems, the inventor has designed a brand-new stereo imaging touch device after careful studies based on the long-term experience.

The present invention is directed to a touch device capable of displaying a stereo image.

The present invention is also directed to a touch device capable of capturing a stereo image of an object.

The present invention is further directed to a touch device capable of enabling a stereo image to change accordingly when being touched.

The present invention is further directed to a touch device capable of performing display switching between a stereo image and a plane image.

In order to achieve the above objectives, the present invention provides a stereo imaging touch device, which includes an image capturing unit, a central processing unit (CPU), and a touch display unit electrically connected. The image capturing unit has a first image capturing unit and a second image capturing unit, for capturing a first image and a second image of a predetermined touch body or a predetermined object, and transmitting the images to the CPU. Then, the CPU generates a stereo image of the predetermined object or a motion track of the predetermined touch body according to the first and second images.

The touch display unit is connected to a display unit, and has a touch unit and a stereo imaging unit. The touch unit is electrically connected to a touch panel and a touch driving element. The stereo imaging unit is disposed with a stereo imaging converter plate and a stereo imaging driving element. The touch panel, the stereo imaging converter plate, and a display panel are sequentially stacked together from top to bottom. The touch driving element, a display driving element, and the stereo imaging driving element are electrically connected to the CPU respectively.

The stereo image is synthesized by a stereo image synthesizing unit within the CPU, and then transmitted to the touch display unit, so that the display unit displays the stereo image. Meanwhile, the stereo imaging driving element converts the stereo image into multiple images, and then, the stereo image is produced after the multiple images being perceived by naked eyes.

When the user touches the touch display unit by using a touch body, the touch unit calculates a motion track of the touch body, and the CPU records the changes of the motion track, so that the stereo image displayed by the display unit changes along with the motion track.

In addition, when the display unit produces the stereo image and the stereo image passes through the stereo imaging converter plate, the stereo imaging driving element can select a mode of the stereo imaging converter plate to display a stereo image or a plane image.

### BRIEF DESCRIPTION OF THE DRAWINGS

The present invention will become more fully understood from the detailed description given herein below for illustration only, and thus is not limitative of the present invention, and wherein:
FIG. 1 is a first block diagram of a preferred embodiment of the present invention;
FIG. 2 is a second block diagram of a preferred embodiment of the present invention;

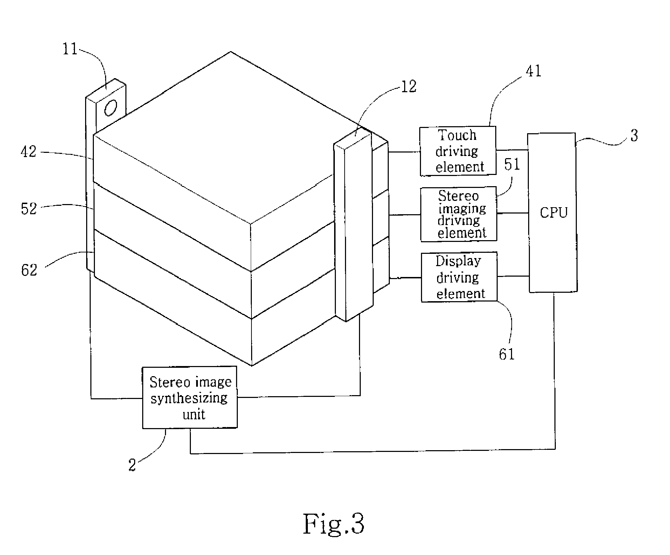

FIG. 3 is a schematic three-dimensional view of a preferred embodiment of the present invention;
FIG. 4 is a first flow chart of a preferred embodiment of the present invention;
FIG. 5 is a second flow chart of a preferred embodiment of the present invention;
FIG. 6 is a third flow chart of a preferred embodiment of the present invention;
FIG. 7 is a first schematic view of image switching according to a preferred embodiment of the present invention;
FIG. 8 is a second schematic view of image switching according to a preferred embodiment of the present invention;
FIG. 9 is a third schematic view of image switching according to a preferred embodiment of the present invention; and
FIG. 10 is a fourth schematic view of image switching according to a preferred embodiment of the present invention.

### DETAILED DESCRIPTION OF THE INVENTION

In order to make the content of the present invention comprehensible to the examiner, the present invention is described in detail below with reference to the accompanying drawings.

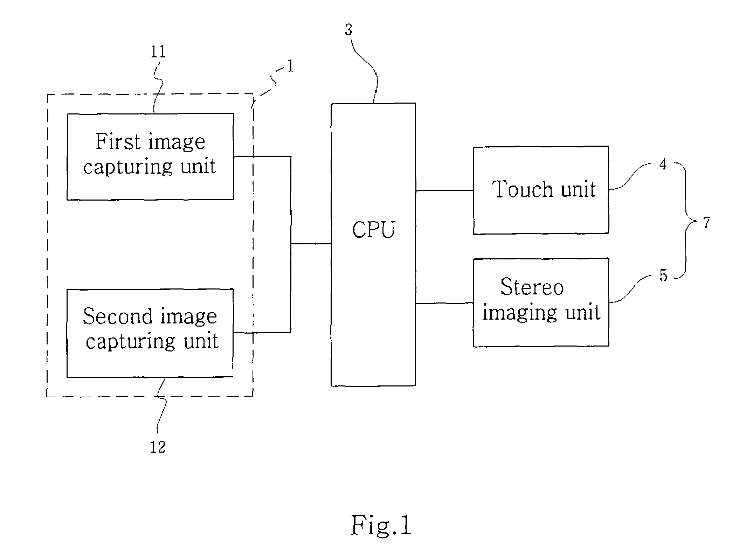

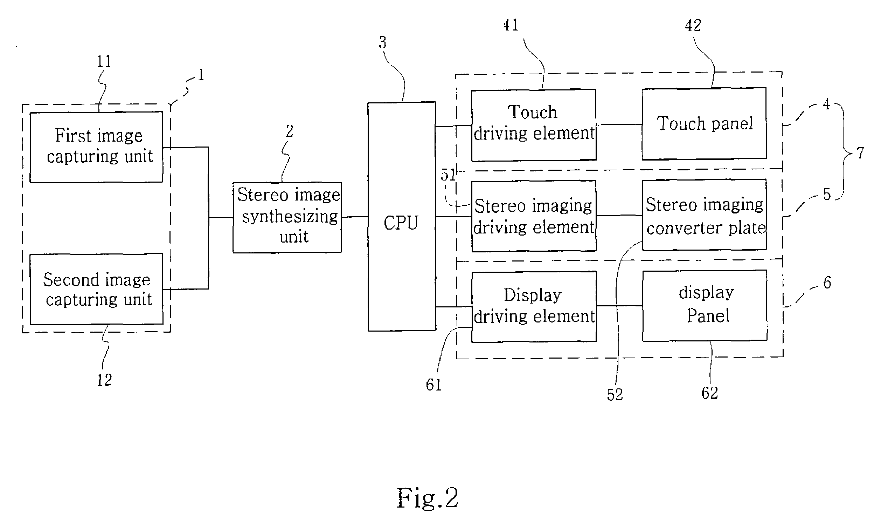

FIGs. 1 and 2 are respectively a first block diagram and a second block diagram of a preferred embodiment of the present invention. Referring to FIGs. 1 and 2, a stereo imaging touch device of the present invention includes an image capturing unit 1, a CPU 3, and a touch display unit 7.

The image capturing unit1 at least includes a first image capturing unit 11 and a second image capturing unit 12, for capturing a first image and a second image of a predetermined touch body, or capturing an appearance of a nearby object. In order to enable the captured image to have a better stereo effect, the image capturing unit1 may be provided with three, four, or even more image capturing units. Generally, the first and second image capturing units 11, 12 are mainly charge-coupled devices (CCDs) or photo-sensitive devices formed by complementary metal-oxide semiconductors (CMOSs), for directly generating the first and second images. Specifically, when the first and second image capturing units 11, 12 are CCDs, the first and second image capturing units 11, 12 are at least selected from a group consisting of linear CCDs, interline transfer CCDs, full-frame CCDs, and frame-transfer CCDs according to their characteristics. Alternatively, the image capturing units may also be infrared sensors or ultrasonic sensors, for capturing appearance sensing signals of different surfaces of the touch body through infrared rays or ultrasonic waves. In practice, the so-called touch body in the present invention may be a finger, a touch pen exclusively designed for touching, or any ordinary object that can be used for touching, which all fall within the scope of the present invention.

The CPU 3 is electrically connected to each unit in the touch display unit 7. The CPU 3 is mainly used for receiving the stereo image and the motion track mentioned later on, and computing changes of the stereo image according to the motion track.

For example, the stereo image is in a form of a triangle pyramid, and its tip portion points to a direct-viewing direction of the user's naked eyes. As the motion track is from top to bottom, the triangle pyramid rotates accordingly, and a flat surface of its bottom portion faces the direct-viewing direction of the user's naked eyes. The above description is only an example for demonstrating the interaction relation between the stereo image and the motion track, and others motions like rotating by any angle, amplification, and horizontal or vertical movement all fall within the scope of the present invention.

Furthermore, the CPU 3 includes a stereo image synthesizing unit 2, electrically connected to the first and second image capturing units 11, 12 respectively, for receiving the first and second images transmitted by the first and second image capturing units 11, 12, and synthesizing the received images into a stereo image. In view of the above, when the first and second image capturing units 11, 12 are CCDs, the stereo image synthesizing unit 2 directly integrates the first and second images into a stereo image signal. Alternatively, the stereo image synthesizing unit 2 may generate a stereo image by using a parallax barrier, binocular parallax, or light source slit manner.

Moreover, if the first and second image capturing units 11, 12 capture a first image and a second image of the touch body during the touch motion, the stereo image synthesizing unit 2 calculates the motion track of the touch body after generating the stereo image.

The touch display unit 7 includes a touch unit 4 and a stereo imaging unit 5, and is further connected to an externally predetermined display unit 6.

The touch unit 4 is electrically connected to a touch panel 42 and a touch driving element 41, and the touch driving element 41 is electrically connected to the CPU 3. The touch driving element 41 is used for recording the motion track of the touch body on the touch panel 42, and transmitting the signal of the motion track to the CPU 3. Generally, the touch panel 42 is a resistive touch panel, a capacitive touch panel, an infrared touch panel, an optical touch panel, or an ultrasonic touch panel. Regardless of the specific form of the touch panel 42, when the touch body contacts the touch panel 42, the touch driving element 41 recodes the motion track of the touch body during the movement. In addition to unidirectional motions, the motion track also includes multi-directional motions. Taking the touch mode with fingers for example, when the index finger and the thumb both contact the touch panel 42, the touch driving element 41 senses two contacts, and records the moving directions of the two contacts, in which the moving directions of the contacts may be identical or different.

The display unit 6 is electrically connected to a display panel 62 and a display driving element 61, and the display driving element 61 is electrically connected to the CPU 3. In this embodiment, the display unit 6 is an LCD, which is taken as an example for illustration only. In practice, the display unit 6 may also be a cathode ray tube (CRT) display, LCD, twisted nematic (TN) LCD, vertical alignment (VA) LCD, multi-domain vertical alignment (MVA) LCD, patterned vertical alignment (PVA) LCD, in-plane switching (IPS) LCD, continuous pinwheel alignment (CPA) LCD, optical compensated bend (OCB) LCD, organic light-emitting diode (OLED) display, active matrix organic light emitting diode (AMOLED) display, passive matrix organic light emitting diode (PMOLED) display, vacuum fluorescent display (VFD), plasma display panel (PDP), surface conduction electron-emitter (SED) display, field emission display (FED), or E-paper, which all fall within the scope defined by the display unit 6, and the form of the display unit 6 in the present invention is not limited thereto.

The stereo imaging unit 5 is electrically connected to a stereo imaging converter plate 52 and a stereo imaging driving element 51, and the stereo imaging driving element 51 is electrically connected to the CPU 3.

The stereo imaging driving element 51 is used for driving the stereo imaging converter plate 52. When the display unit 6 generates a stereo image, the stereo image converter plate 52 receives and converts the stereo image into multiple images, such that the stereo image is divided into images respectively received by the left eye and the right eye according to the characteristics of the naked eyes in receiving images. Then, the images are perceived and integrated into the stereo image due to the binocular disparity. In addition, the stereo imaging converter plate 52 employs a light grating or a lenticular sheet to divide the stereo image generated by the display unit into the multiple images. Meanwhile, the stereo imaging driving element 51 is used for controlling the stereo imaging converter plate 52, so as to convert the stereo image displayed by the display panel 62 between a plane mode and a stereo mode.

Furthermore, in practical usage, the stereo image synthesizing unit 2, the touch driving element 41, the stereo imaging driving element 51, or the display driving element 61 is in the form of an integrated circuit (IC) electrically connected to the CPU 3, or in the form of firmware recorded in the CPU 3, or in the form of software read and computed by the CPU 3, or in the form of an electronic circuit constituted by active and passive devices.

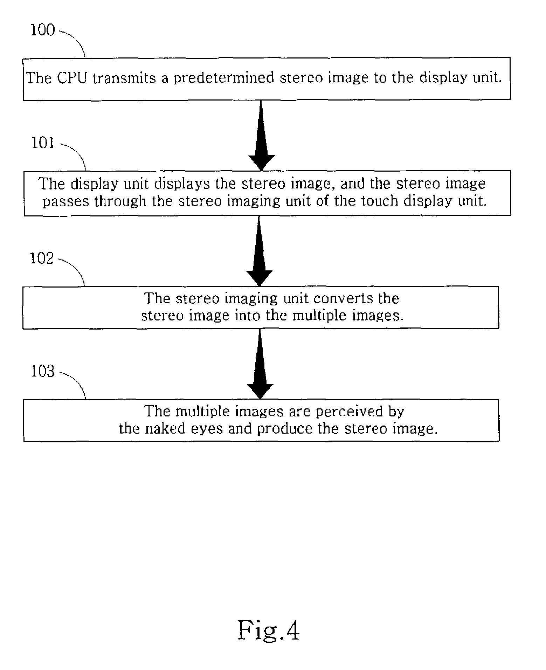

FIGs. 2 and 4 are respectively a second block diagram and a first flow chart of a preferred embodiment of the present invention. In the present invention, a stereo imaging process is performed in the following manner.

In Step 100, the CPU transmits a predetermined stereo image to the display unit.

In this step, the CPU 3 transmits a predetermined stereo image to the display unit 6, and the stereo image may be pre-stored in a predetermined storage medium, for example, the touch device is integrated in a mobile phone, an LCD screen, or a TV screen, and the storage medium may be a memory, a memory card, a hard disk, or an optical disk.

In Step 101, the display unit displays the stereo image, and the stereo image passes through the stereo imaging unit of the touch display unit.

In Step 102, the stereo imaging unit converts the stereo image into the multiple images.

In Step 103, the multiple images are perceived by the naked eyes and produce the stereo image.

In the above steps, upon receiving the stereo image transmitted by the CPU 3, the display driving element 61 of the display unit 6 drives the display panel 62 to display the stereo image (the displaying principle of the liquid crystal panel or other displaying technologies have been disclosed and applied for many years, and is not an appeal of the present invention, so that the details thereof are not described herein again). Meanwhile, the stereo imaging driving element 51 of the stereo imaging unit 5 drives the stereo imaging converter plate 52 to operate. As the stereo imaging converter plate 52 is stacked above the display panel 62, the stereo image generated by the display panel 62 is converted into multiple images by the stereo imaging converter plate 52, such that the stereo image is divided into images respectively received by the left eye and the right eye according to the characteristics of the naked eyes in receiving images. Then, the images are perceived and integrated into the stereo image due to the binocular disparity.

Furthermore, when the user intends to display an image on the display panel 62, the stereo imaging driving element 51 may be adopted to perform display switching between a stereo image and a plane image. Generally, when a plane image is displayed, the stereo imaging driving element 51 generates an electric signal, so that the internal structure of the stereo imaging converter plate 52 is polarized to the same direction, and the image produced by the display panel 62 may not be divided into multiple images, thereby maintaining the current display frame on the display panel 62.

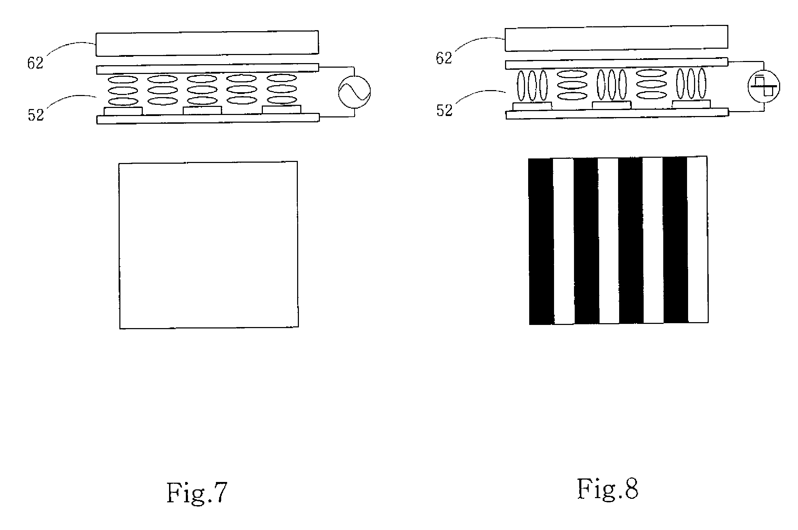

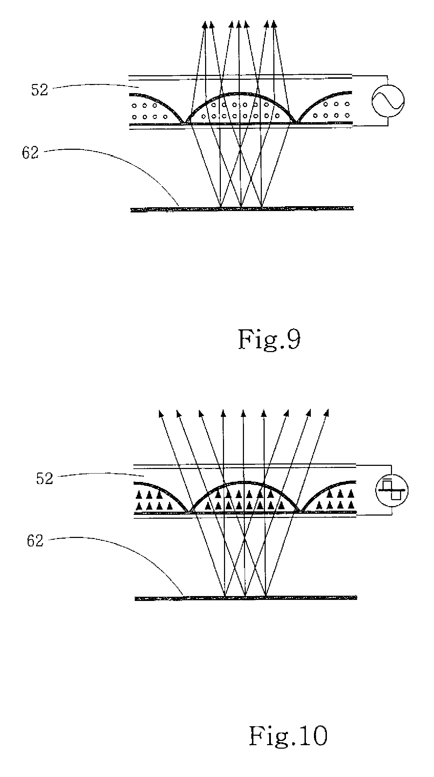

When a stereo image is displayed, the stereo imaging driving element 51 generates an electric signal, so that the internal structure of the stereo imaging converter plate 52 is polarized into a regular structure in different directions, and the image produced by the display panel 62 is divided into multiple images. The above switching between a stereo image and a plane image is realized by an active lens in FIGs. 7 and 8, and realized by an LC barrier in FIGs. 9 and 10. Other structures such as lenticular lens or LC lens may also be used for realizing the function of switching between a stereo image and a plane image.

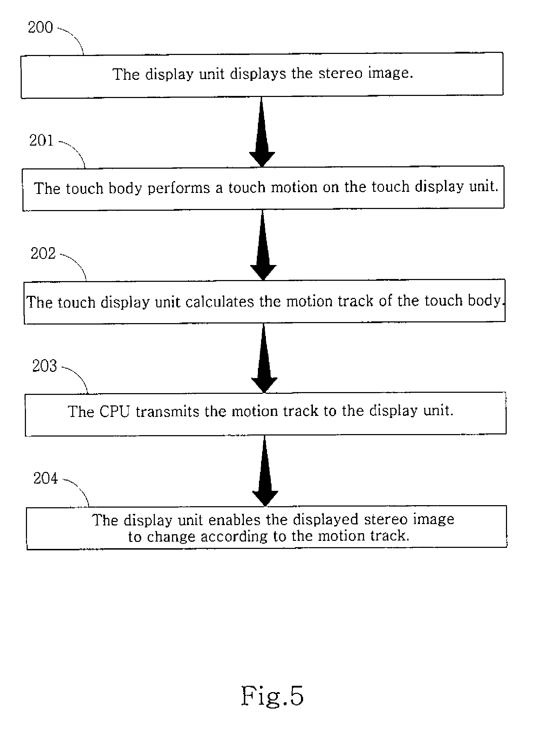

FIGs. 2 and 5 are respectively a second block diagram and a second flow chart of a preferred embodiment of the present invention. In the present invention, a stereo imaging touch operation is performed in the following manner.

In Step 200, the display unit displays the stereo image.

This step is similar to the first flow chart, so that the details thereof are not described herein again.

In Step 201, the touch body performs a touch motion on the touch display unit.

In the above step, the touch body directly contacts the touch panel 42 of the touch unit 4, and directly performs the touch motion on a surface of the touch panel 42, which is referred to as a contact touch.

In Step 202, the touch display unit calculates the motion track of the touch body.

In Step 203, the CPU transmits the motion track to the display unit.

In the above step, the touch driving element 41 records the motion track of the touch body during the movement, for example, a unidirectional movement, a multi-directional movement, a linear movement, or a non-linear movement, and calculates the movement of the motion track through coordinates.

In Step 204, the display unit enables the displayed stereo image to change according to the motion track.

In the above steps, upon receiving the motion track, the CPU 3 matches the motion track with predetermined motions and enables the stereo image to change according to the motion track, and the stereo image displayed by the display unit 6 changes along with the motion track. For example, if the motion track is from top to bottom, the stereo image rotates up and down; alternatively, if the motion track is to gradually increase a distance between two contacts, the stereo image is amplified accordingly. Meanwhile, the stereo imaging unit 5 divides the stereo image into multiple images, i.e., divides the stereo image into an image specifically received by the left eye and an image specifically received by the right eye, and the two images are synthesized into the stereo image in the brain after being perceived by the left and right eyes respectively, so as to produce a real-time motion effect of the stereo image.

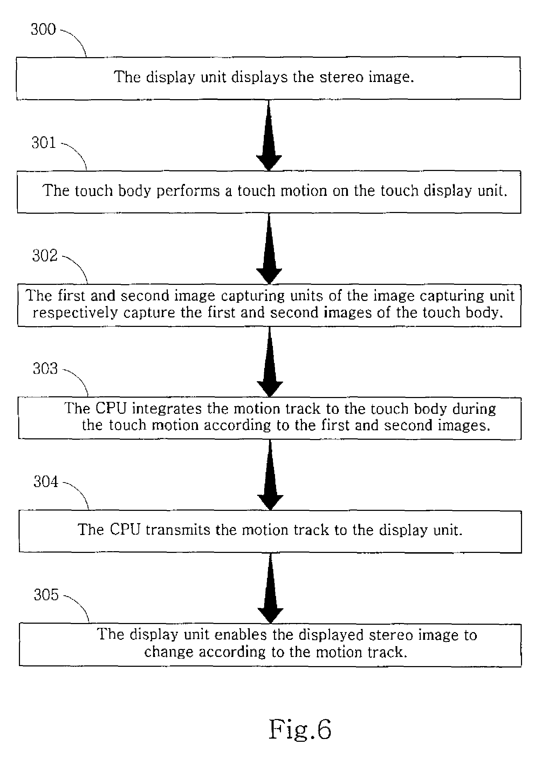

FIGs. 2 and 6 are respectively a second block diagram and a third flow chart of a preferred embodiment of the present invention. In the present invention, a stereo imaging touch operation is performed in the following manner.

In Step 300, the display unit displays the stereo image.

This step is similar to the first flow chart, so that the details thereof are not described herein again.

In Step 301, the touch body performs a touch motion on the touch display unit.

In this step, the touch body approaches, without contacting, the touch panel 42 of the touch unit 4, and thus performs the touch motion above the surface of the touch panel 42, which is referred to as a non-contact touch.

In Step 302, the first and second image capturing units of the image capturing unit respectively capture the first and second images of the touch body.

In this step, the first and second image capturing units 11, 12 capture images of the touch body from different angles, for example, from the front and back sides or from the left and right sides.

In Step 303, the CPU integrates the motion track of the touch body during the touch motion according to the first and second images.

In this step, the stereo image synthesizing unit 2 receives the first and second images transmitted by the first and second image capturing units 11, 12, and generates the motion track of the touch body through the stereo calculation, for example, a 3D simulation commonly used in CAD.

In Step 304, the CPU transmits the motion track to the display unit.

In Step 305, the display unit enables the displayed stereo image to change according to the motion track.

In the above steps, upon receiving the motion track, the CPU 3 matches the motion track with predetermined motions and enables the stereo image to change according to the motion track, and the stereo image displayed by the display unit 6 changes along with the motion track. Meanwhile, the stereo imaging unit 5 divides the stereo image into multiple images for being perceived by the left and right eyes respectively, so that the stereo image is generated in the brain, so as to produce a real-time motion effect of the stereo image.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

In view of the above, the stereo imaging touch device of the present invention has the creative step and industrial applicability, so that the present application is filed for a utility model patent according to the provisions of the Patent Act.

## Claims

1. A stereo imaging touch device, comprising:
an image capturing unit, at least comprising a first image capturing unit and a second image capturing unit, for capturing a first image and a second image of a predetermined object;
a touch display unit, comprising a touch unit and a stereo imaging unit, wherein the touch unit is used for recording a motion track of a predetermined touch body when touching the touch unit, and the stereo imaging unit is used for converting a stereo image into multiple images, the stereo image is produced after the multiple images being perceived by naked eyes; and
a central processing unit (CPU), electrically connected to the image capturing unit and the touch display unit respectively, for synthesizing the first and second images into a stereo image, receiving the motion track, and transmitting the stereo image and the motion track to a predetermined display unit, so as to enable the display unit to display a real-time motion of the stereo image according to the motion track.

2. The stereo imaging touch device according to claim 1, wherein the first and second image capturing units are charge-coupled devices (CCDs) or photo-sensitive devices formed by complementary metal-oxide semiconductors (CMOSs).

3. The stereo imaging touch device according to claim 2, wherein the first and second image capturing units are CCDs selected from a group consisting of linear CCDs, interline transfer CCDs, full-frame CCDs, and frame-transfer CCDs.

4. The stereo imaging touch device according to claim 1, wherein the first and second image capturing units are infrared sensors for generating appearance sensing signals of different surfaces of the predetermined object, and the CPU synthesizes the signals into the stereo image.

5. The stereo imaging touch device according to claim 1, wherein the first and second image capturing units are ultrasonic sensors for generating appearance sensing signals of different surfaces of the predetermined object, and the CPU synthesizes the signals into the stereo image.

6. The stereo imaging touch device according to claim 1, wherein the first and second image capturing units further capture a first image and a second image of the touch body, and the CPU integrates the motion track of the touch body according to the first and second images.

7. The stereo imaging touch device according to claim 1, wherein the touch unit comprises a touch panel for being touched by the touch body and a touch driving element for computing the motion track of the touch body.

8. The stereo imaging touch device according to claim 7, wherein the touch driving element is in a form of an integrated circuit (IC) electrically connected to the CPU, or in a form of firmware recorded in the CPU, or in a form of software read and computed by the CPU, or in a form of an electronic circuit constituted by active and passive devices.

9. The stereo imaging touch device according to claim 7, wherein the touch panel is one selected from a resistive touch panel, a capacitive touch panel, an infrared touch panel, an optical touch panel, and an ultrasonic touch panel.

10. The stereo imaging touch device according to claim 1, wherein the stereo imaging unit comprises a stereo imaging converter plate and a stereo imaging driving element,
the stereo imaging converter plate is used for converting the stereo image into the multiple images; and
the stereo imaging driving element is electrically connected to the stereo imaging converter plate, and used for driving the stereo imaging converter plate to operate, so as to convert the stereo image between a plane mode and a stereo mode.

11. The stereo imaging touch device according to claim 10, wherein the stereo imaging converter plate is an light grating structure or a lenticular sheet.

12. The stereo imaging touch device according to claim 10, wherein the multiple images are at least divided into a left eye image or a right eye image.

13. The stereo imaging touch device according to claim 10, wherein the stereo imaging converter plate controlled by the stereo imaging driving element has a structure selected from a group consisting of an active lens structure, a lenticular lens structure, a liquid crystal (LC) lens structure, and an LC barrier structure.

14. The stereo imaging touch device according to claim 10, wherein the stereo imaging driving element is in a form of an IC electrically connected to the CPU, or in a form of firmware recorded in the CPU, or in a form of software read and computed by the CPU, or in a form of an electronic circuit constituted by active and passive devices.

15. The stereo imaging touch device according to claim 1, wherein the CPU comprises a stereo image synthesizing unit for synthesizing the first and second images into the stereo image.

16. The stereo imaging touch device according to claim 15, wherein the stereo image synthesizing unit synthesizes the stereo image by using a parallax barrier, binocular parallax, or light source slit manner.

17. The stereo imaging touch device according to claim 15, wherein the stereo image synthesizing unit is in a form of an IC electrically connected to the CPU, or in a form of firmware recorded in the CPU, or in a form of software read and computed by the CPU, or in a form of an electronic circuit constituted by active and passive devices.

18. The stereo imaging touch device according to claim 1, wherein the touch unit of the touch display unit is stacked on the stereo imaging unit, and the stereo imaging unit is stacked on the display unit, so that the stereo image displayed by the display unit passes through the stereo imaging unit.

19. The stereo imaging touch device according to claim 1, wherein the display unit is one selected from a group consisting of cathode ray tube (CRT) display, a liquid crystal display (LCD), a twisted nematic (TN) LCD, a vertical alignment (VA) LCD, a multi-domain vertical alignment (MVA) LCD, a patterned vertical alignment (PVA) LCD, an in-plane switching (IPS) LCD, a continuous pinwheel alignment (CPA) LCD, an optical compensated bend (OCB) LCD, an organic light-emitting diode (OLED) display, an active matrix organic light emitting diode (AMOLED) display, a passive matrix organic light emitting diode (PMOLED) display, a vacuum fluorescent display (VFD), a plasma display panel (PDP), a surface conduction electron-emitter (SED) display, a field emission display (FED), and an E-paper.

20. The stereo imaging touch device according to claim 1, wherein the touch display unit performs a stereo imaging process in the following manner:
transmitting, by the CPU, a predetermined stereo image to the display unit;
displaying the stereo image by the display unit, wherein the stereo image passes through the stereo imaging unit of the touch display unit;
converting, by the stereo imaging unit, the stereo image into the multiple images; and
perceiving, by naked eyes, the multiple images to generate the predetermined stereo image.

21. The stereo imaging touch device according to claim 1, wherein the touch device performs a stereo imaging touch operation in the following manner:
displaying the stereo image by the display unit;
performing a touch motion on the touch display unit by the touch body;
computing the motion track of the touch body by the touch display unit;
transmitting, by the CPU, the motion track to the display unit; and
enabling, by the display unit, the displayed stereo image to change according to the motion track.

22. The stereo imaging touch device according to claim 21, wherein in the step of performing a touch motion on the touch display unit by the touch body, the touch motion is a contact touch.

23. The stereo imaging touch device according to claim 1, wherein the touch device performs a stereo imaging touch operation in the following manner:
displaying the stereo image by the display unit;
performing a touch motion on the touch display unit by the touch body;
capturing the first and second images of the touch body by the first and second image capturing units of the image capturing unit respectively;
integrating, by the CPU, the motion track of the touch body during the touch motion according to the first and second images;
transmitting the motion track to the display unit by the CPU; and
enabling, by the display unit, the displayed stereo image to change according to the motion track.

24. The stereo imaging touch device according to claim 23, wherein in the step of performing a touch motion on the touch display unit by the touch body, the touch motion is a non-contact touch.
